# NEUE EUROPÄISCHE PATENTSCHRIFT

(11) **EP 2 682 290 B2**
(45) Veröffentlichungstag und Bekanntmachung des Hinweises auf die Entscheidung über den Einspruch: **10.11.2021**
(45) Hinweis auf die Patenterteilung: 27.04.2016
(21) Anmeldenummer: 13171734.0
(22) Anmeldetag: 12.06.2013
(51) Int. Cl.: B60D 1/06, B60D 1/58

(54) **Kupplungspfanne mit Festkörperschmierstoff**
Coupling socket with solid lubricant
Oeillet d'accouplement avec lubrifiant à corps solides

(30) Priorität: 04.07.2012 DE 102012211666
(43) Veröffentlichungstag der Anmeldung: 08.01.2014
(73) Patentinhaber: Rockinger Agriculture GmbH, 99880 Waltershausen (DE)
(72) Erfinder: Schack, Jörg, 99869 Hochheim (DE); Begander, Peter, 99867 Gotha (DE)
(74) Vertreter: Ruttensperger Lachnit Trossin Gomoll

(56) Entgegenhaltungen:
- EP-A1- 0 701 938
- EP-A1- 1 369 266
- EP-A1- 1 564 033
- WO-A2-2007/134070

## Beschreibung

Die vorliegende Erfindung betrifft eine Kupplungspfanne einer Kugelkupplung gemäß dem Oberbegriff von Anspruch 1.

Die vorliegende Erfindung betrifft ebenso eine Kugelkupplung gemäß dem Oberbegriff von Anspruch 13.

Aus der DE 22 35 874 C3 ist ein Kugelgelenk mit Gelenkkugel und Kugelpfanne bekannt. Diese Druckschrift lehrt, in der Kugelpfanne eine Lagerschale, die aus Kunststoff hergestellt sein kann, derart anzuordnen, dass dann, wenn Gelenkkugel und Kugelpfanne miteinander gekuppelt sind, die Lagerschale sich zwischen Gelenkkugel und Kugelpfanne befindet. Die Lagerschale ist in die die Gelenkkugel aufnehmende Kavität der Kugelpfanne eingesetzt und dort über einen gesondert ausgebildeten Feder- bzw. Sprengring formschlüssig gehalten. Der Federring ist in eine Nut der einstückig ausgebildeten Kugelpfanne in an sich bekannter Weise eingesetzt.

Der bekannte Federring ist überdies derart ausgestaltet und bemessen, dass er beim Einführen der Gelenkkugel in die Kugelpfanne von dieser aufgeweitet wird und nach Durchgang des Äquators der Gelenkkugel sich hinter dieser wieder zu einem Durchgangsmaß mit geringerer lichter Weite als der Äquatordurchmesser der Gelenkkugel entspannt.

Eine Kugelkupplung mit Kupplungspfanne und Kupplungskugel zum Ankuppeln eines Nachlauffahrzeugs an ein Zugfahrzeug ist aus der FR 903 599 A bekannt, welche am 09. Oktober 1945 veröffentlicht wurde. Diese Druckschrift offenbart die Anordnung eines Kautschuk-Zwischenelements an der Kupplungspfanne derart, dass sich das Kautschuk-Zwischenelement im angekuppelten Zustand wiederum zwischen Kupplungspfanne und Kupplungskugel befindet. Das Kautschuk-Zwischenelement ist mittels eines Niets an der Kupplungspfanne gehalten. Als Gleitelement ist in das Kautschuk-Zwischenelement eine Lagerschale aus Stahlblech einvulkanisiert. Das Kautschuk-Zwischenelement ist an seinem einführseitigen Längsende etwa zylindrisch ausgebildet und ist an seinem dem Einführende gegenüberliegenden Niet-Befestigungsende (Anlageende) halbkugelförmig ausgebildet. An der Kupplungspfanne sind verlagerbare Spannbacken vorgesehen, welche nach Einführen der Kupplungskugel in die Kupplungspfanne den zylindrischen Abschnitt des Kautschuk-Zwischenelements in Anlage an die Kupplungskugel bringen und somit die Kupplungskugel formschlüssig in der bekannten Kupplungspfanne halten.

Eine weitere Kugelkupplung zum Ankuppeln eines Nachlauffahrzeugs an ein Zugfahrzeug sowie deren Kupplungspfanne sind aus der DE 201 16 970 U1 bekannt. Diese Druckschrift offenbart eine Kugelkupplung, deren Kupplungspfanne oder/und Kupplungskugel in ihrem Kupplungsabschnitt bzw. Gegenkupplungsabschnitt mit vertieften Schmiertaschen ausgebildet ist, in welche Schmierfett einbringbar ist und die somit als ein Schmierfettreservoir dienen können. Das Schmierfett kann vor dem Ankuppeln der Kupplungspfanne an die Kupplungskugel von Hand oder mit einem geeigneten Werkzeug aufgetragen werden oder es kann, wie beispielsweise aus der WO-A-2006 122807 bekannt ist, über einen an der Kupplungspfanne oder der Kupplungskugel vorgesehenen Schmiernippel auch im gekuppelten Zustand von Kupplungspfanne und Kupplungskugel in den Kupplungsabschnitt bzw. Gegenkupplungsabschnitt eingebracht werden.

Eine Kupplungskugel einer gattungsgemäßen Kugelkupplung zum Ankuppeln eines Nachlauffahrzeugs an ein Zugfahrzeug mit einem konvexen Gegenkupplungsabschnitt und einem daran angebrachten Festkörperschmierstoffbauteil ist aus der WO 2007/134070 A2 bekannt. Der konvexe Gegenkupplungsabschnitt der bekannten Kupplungskugel liegt im gekuppelten Zustand einem konkaven Kupplungsabschnitt einer entsprechenden Kupplungspfanne gegenüber und berührt diesen in einem Berührbereich. Im Gegenkupplungsabschnitt der bekannten Kupplungskugel ist ein Schmierungsbereich vorgesehen, welcher zur Aufnahme eines Festkörperschmierstoffbauteils ausgebildet ist. Das aus der WO 2007/134070 A2 bekannte Festkörperschmierstoffbauteil liegt in einem in der vorliegenden Anmeldung definierten Bezugszustand als Festkörper vor.

Dadurch, dass in dem wenigstens einen Schmierungsbereich ein Festkörperschmierstoffbauteil aufgenommen ist, welches zumindest in einem Bezugszustand mit einer Temperatur von 20°C, einem Luftdruck von 1 bar und mechanisch nur durch sein Eigengewicht belastet als Festkörper vorliegt, ist die insbesondere zum Schmieren notwendige Wartungsarbeit gegenüber einer fettgeschmierten Kugelkupplung oder/und Kupplungspfanne reduziert.

Durch die Anordnung eines Festkörperschmierstoffbauteils in dem wenigstens einen Schmierungsbereich entfällt ein häufiges Nachfüllen oder Beladen des Schmierungsbereichs mit Schmierfett, wie es bei der Kugelkupplung des Standes der Technik notwendig war. Das Festkörperschmierstoffbauteil stellt eine Gleitfläche bereit, an der der Gegenkupplungsabschnitt der Kupplungskugel im gekuppelten Zustand von Kupplungspfanne und Kupplungskugel im Vergleich zum unmittelbaren ungeschmierten Anlageeingriff von Kupplungspfanne und Kupplungskugel mit verminderter Reibung gleitend anliegen kann, ohne dass der Gleitanlageeingriff den Festkörperschmierstoff in den zwischen Kupplungsabschnitt und Gegenkupplungsabschnitt vorhandenen Spaltraum mehr oder weniger unkontrolliert fördert oder verteilt. Die durch das wenigstens eine Festkörperschmierstoffbauteil geschaffene Schmierungssituation bleibt aufgrund der, verglichen mit einem formlosen pulverförmigen Schmierstoff, wie etwa Graphit, oder einem pastösen oder flüssigen Schmierstoff, wie Schmierfett oder Schmieröl, höheren Formstabilität des Festkörperschmierstoffbauteils über lange Zeit im Wesentlichen unverändert erhalten. Der Wartungsaufwand zur Wiederherstellung einer vorbestimmten Schmierungssituation, wie er bei der Verwendung von pulverförmigem Graphit, pastösem Schmierfett oder flüssigem Schmieröl notwendig ist, kann somit entfallen oder ist erheblich reduziert.

Da Werkstoffe allgemein unter unterschiedlichen vorbestimmten Bedingungen in unterschiedlichen Aggregatszuständen vorliegen können, soll zur Feststellung, ob ein verwendeter Schmierstoff ein Festkörper im Sinne der vorliegenden Anmeldung ist oder nicht, ein Bezugszustand des Schmierstoffs mit einer Temperatur von 20°C, einem Atmosphärendruck der normalen Luftatmosphäre von 1 bar und einem außer durch sein Eigengewicht unbelasteten Schmierstoffbauteil herangezogen werden. Ist das Schmierstoffbauteil in dem betreffenden Zustand ein Festkörper mit vorgegebener Gestalt, d. h. weder flüssig, noch pastös oder pulverförmig oder gar gasförmig, dann soll ein derartiges Schmierstoffbauteil als Festkörperschmierstoffbauteil im Sinne der vorliegenden Anmeldung gelten.

Das Vorliegen als Festkörper in dem betreffenden Bezugszustand soll keinesfalls ausschließen, dass das Schmierstoffbauteil auch bei höheren oder tieferen Temperaturen oder bei höheren und niedrigeren Luftdrücken ein Festkörper ist. Dies wird in der Regel sogar der Fall sein. Zur Entscheidung, ob ein Schmierstoffbauteil ein Festkörperschmierstoffbauteil im Sinne der vorliegenden Anmeldung ist, soll jedoch das Schmierstoffbauteil in dem oben definierten Bezugszustand betrachtet werden. Mit der bezeichneten Temperatur ist dabei sowohl die Temperatur des Schmierstoffbauteils als auch die Temperatur der es umgebenden Atmosphäre bezeichnet.

Aufgabe der vorliegenden Erfindung ist, die gattungsgemäße Kugelkupplung oder/und ihr maßgebliches Bestandteil: Kupplungspfanne, derart zu verbessern, dass die Montage des Festkörperschmierstoffbauteils bei gleicher Standfestigkeit der montierten Kugelkupplung oder eines ihrer maßgeblichen Bestandteile gegenüber dem Stand der Technik erleichtert ist.

Diese Aufgabe wird gemäß der vorliegenden Erfindung an einer gattungsgemäßen Kupplungspfanne durch die Merkmale des kennzeichnenden Teils des Anspruchs 1 gelöst oder/und an einer gattungsgemäßen Kugelkupplung durch die Merkmale des kennzeichnenden Teils des Anspruchs 13 gelöst. Gemeinsam ist beiden Lösungen, dass das Festkörperschmierstoffbauteil durch Formschluss an der Kupplungspfanne gehalten ist. Beispielsweise kann das Festkörperschmierstoffbauteil in eine komplementäre Vertiefung im Kupplungsabschnitt der Kupplungspfanne eingesetzt sein, wobei bevorzugt die radiale Dicke des Schmierstoffbauteils größer ist als die radiale Abmessung der Vertiefung, in die es eingesetzt ist, um ein Vorstehen der Anlagefläche über eine benachbarte Oberfläche des Kupplungsabschnitts zu gewährleisten. Das Festkörperschmierstoffbauteil kann durch Formschlusseingriff einer Nut in einem Bauteil aus Festkörperschmierstoffbauteil und Kupplungspfanne mit einem im jeweils anderen Bauteil ausgebildeten Rastvorsprung an der Kupplungspfanne lagegesichert sein.

Eine formschlüssige Halterung des Festkörperschmierstoffbauteils an der Kupplungspfanne ist erfindungsgemäß in besonders einfacher Weise konstruktiv dadurch erreicht, dass in einer Einführrichtung, in welcher die Kupplungskugel beim Ankuppeln längs einer Einführbahn in eine Einführöffnung der Kupplungspfanne eingeführt wird, hinter der Einführöffnung ein Absatz ausgebildet ist, welcher von dem Festkörperschmierstoffbauteil hintergriffen ist. Vorzugsweise ist der Absatz ein um die Einführbahn umlaufender Absatz, so dass eine möglichst große Anlagefläche des den Absatz hintergreifenden Festkörperschmierstoffbauteils mit dem Absatz gegeben ist und so dass die Hintergriffsituation möglichst unabhängig vom Umfangsort um die Einführbahn ist. Der Absatz kann die Stirnfläche eines längs der Einführbahn aus einem die Einführöffnung enthaltenden Einführbereich der Kupplungspfanne entnehmbaren Absatzbauteils, etwa eines Rohrstücks, sein.

Beispielsweise kann das Absatzbauteil bzw. Rohrstück ein Außengewinde aufweisen, mit welchem es in den Einführbereich der Kupplungspfanne vermittels eines dort vorgesehenen Innengewindes einschraubbar und aus diesem ausschraubbar sein kann.

Aber auch andere Festlegungsmittel eines den Absatz bildenden gesonderten Bauteils der Kupplungspfanne, wie etwa von außen in die Kupplungspfanne bis zu dem Absatzbauteil eingedrehte Schrauben und dergleichen, sollen nicht ausgeschlossen sein.

Durch ein derartiges lösbares Absatzbauteil kann der Austausch eines verschlissenen oder zu stark verschmutzten Festkörperschmierstoffbauteils gegen ein betriebsbereites Festkörperschmierstoffbauteil erheblich erleichtert sein.

Vorzugsweise ist der oben beschriebene Absatz Teil der zuvor beschriebenen Nut, die im Kupplungsabschnitt ausgebildet sein kann. Die Nut bzw. der Absatz laufen vorzugsweise vollständig um die Einführbahn kontinuierlich um, so dass ein um den Umfang eines Einführbereichs der Kupplungspfanne herum möglichst gleichmäßiger Befestigungszustand erreicht werden kann.

Vorzugsweise ist der Rastvorsprung also an dem Festkörperschmierstoffbauteil ausgebildet, wenngleich dies nicht so sein muss. Mit Ausbildung der Nut am Festkörperschmierstoffbauteil würde dieses jedoch in der Regel eine Dünnstelle aufweisen, was gegenüber einer durch Ausbilden eines Rastvorsprungs bewirkten Verdickung nicht vorteilhaft erscheint.

Weiter vorteilhaft kann der Rastvorsprung an einem Ende des Festkörperschmierstoffbauteils ausgebildet sein, so dass das Festkörperschmierstoffbauteil an einem Ende mit dem Rastvorsprung abschließt. Dadurch werden im montierten Zustand Spalte zwischen Festkörperschmierstoffbauteil und Kupplungspfanne oder Kupplungskugel vermieden oder reduziert, in denen sich unerwünschterweise Schmutz ansammeln kann. Das Ende des Festkörperschmierstoffbauteils ist vorzugsweise jenes Einführende, durch welches hindurch die Kupplungskugel zur Anlage der Kupplungskugel an dem an der Kupplungspfanne festgelegten Festkörperschmierstoffbauteil eingeführt wird.

Im Folgenden wird die Erfindung anhand ihrer Anwendung an einer Kupplungspfanne weitergebildet.

Damit das Festkörperschmierstoffbauteil seine Wirkung bestmöglich entfalten kann, ist es vorteilhaft, wenn es eine Anlagefläche aufweist, an welcher im gekuppelten Zustand von Kupplungspfanne und Kupplungskugel bei Anordnung des Festkörperschmierstoffbauteils in der Kupplungspfanne die Kupplungskugel in Anlageeingriff ist.

Zur Vermeidung unerwünscht hoher Flächenpressungen zwischen Kupplungspfanne oder/und Kupplungskugel und der Anlagefläche des Festkörperschmierstoffbauteils ist es bevorzugt, wenn die Anlagefläche gekrümmt, besonders vorteilhaft um zwei zueinander orthogonale Raumachsen gekrümmt ausgebildet ist. Da der Kupplungsbereich wie auch der Gegenkupplungsbereich zumindest abschnittsweise als Kugelkalottenoberfläche ausgebildet sind, ist bevorzugt auch die Anlagefläche des Festkörperschmierstoffbauteils als Kugelkalottenfläche ausgebildet. Dabei handelt es sich um eine konkave Kugelkalottenfläche bei Anordnung des Festkörperschmierstoffbauteils in der Kupplungspfanne.

Um sicherzustellen, dass die Kupplungskugel im gekuppelten Zustand in Anlageeingriff mit der Anlagefläche des Festkörperschmierstoffbauteils gelangen, kann vorgesehen sein, dass die Anlagefläche des Festkörperschmierstoffbauteils gegenüber einer dem Festkörperschmierstoffbauteil benachbarten Oberfläche des Kupplungsabschnitts vorsteht.

Zusätzlich kann das Festkörperschmierstoffbauteil bei Anordnung in der Kupplungspfanne mit dieser verklebt sein.

Zur Sicherstellung einer Anlage des Gegenkupplungsabschnitts der Kupplungskugel an der Anlagefläche des Festkörperschmierstoffbauteils in möglichst vielen oder sogar allen Betriebssituationen der hier diskutierten Kugelkupplung ist es vorteilhaft, wenn der gesamte Kupplungsabschnitt der Kupplungspfanne durch das Festkörperschmierstoffbauteil gebildet ist. Somit kann der gesamte Kupplungsabschnitt durch die Anlagefläche des Festkörperschmierstoffbauteils gebildet sein, wodurch gewährleistet ist, dass der eingangs beschriebene Berührbereich zwischen Kupplungskugel und Kupplungspfanne stets in der Anlagefläche des Festkörperschmierstoffbauteils gelegen ist.

Dann ist das Festkörperschmierstoffbauteil vorteilhaft einstückig ausgebildet, bzw. es ist zur Erleichterung seiner Montage an einer Kupplungspfanne genau ein Festkörperschmierstoffbauteil vorgesehen. Jedoch soll ebenfalls nicht ausgeschlossen sein, dass die Kupplungspfanne eine Mehrzahl von Festkörperschmierstoffbauteilen aufweist, welche über den Kupplungsabschnitt bzw. den Gegenkupplungsabschnitt verteilt vorgesehen sind.

Beispielsweise können die Festkörperschmierstoffbauteile vorgesehen sein, welche äquidistant um die Einführbahn herum in der Kupplungspfanne angeordnet sein können. Auch dadurch kann bei entsprechender Winkelbreite der Festkörperschmierstoffbauteile eine im gekuppelten Zustand stetige Anlagefläche der Festkörperschmierstoffbauteile in allen oder zumindest in den meisten Betriebssituationen sichergestellt sein. Ebenso können 4, 5, 6 oder mehr Festkörperschmierstoffbauteile über den Kupplungsabschnitt verteilt vorgesehen sein, wobei im Falle einer Anordnung mehrerer Festkörperschmierstoffbauteile die Anzahl von drei Festkörperschmierstoffbauteilen bevorzugt ist, da diese bei ausreichender Abdeckung des Kupplungsabschnitts mit Anlagefläche der Festkörperschmierstoffbauteile den geringsten Montageaufwand bei der Verwendung einer Mehrzahl von Festkörperschmierstoffbauteilen erfordert.

"Schmierstoff" im Sinne der vorliegenden Anmeldung ist jedes Material oder jede Materialkombination, dessen bzw. deren Zwischenanordnung zwischen Kupplungskugel und Kupplungspfanne die zwischen diesen Kugelkupplungsbauteilen auftretende Reibung im Vergleich zu deren unmittelbarem ungeschmiertem Kontakt mindert.

Als Festkörperschmierstoff kommt grundsätzlich ein Polymer in Frage, wobei teil- oder hochkristalline Polymere aufgrund ihrer Verschleißfestigkeit bevorzugt sind. Dabei sind Polymere mit einem Kristallisationsgrad von 20 bis 95 % bevorzugt. Der Kristallisationsgrad ist dabei der Quotient der kristalli - nen Polymermasse zur gesamten Polymermasse.

Aufgrund ihrer besonders ausgeprägten Verschleißfestigkeit bei gleichzeitig guter Schmierwirkung ist Polyamid oder stärker noch aromatisches Polyamid als Festkörperschmierstoff bevorzugt. Die beste Gesamtleistung aus Schmierfähigkeit bei gleichzeitig hoher Verschleißfestigkeit bzw. Standfestigkeit hat Polyaramid gezeigt, welches daher der am meisten bevorzugte Festkörperschmierstoff in der hier geschilderten Anwendung in einer Kugelkupplung ist.

Neben den oben genannten Polyamiden, aromatischen Polyamiden und den ganz besonders bevorzugten Polyaramiden können jedoch auch wenigstens teilfluorierte Kunststoffe wie Polytetrafluorethylen oder Polyvinylidenfluorid als Festkörperschmierstoff dienen, wenngleich deren erwartete Standzeit in dem hochbelastenden Kupplungsbetrieb niedriger ausfallen dürfte als die der aromatischen Polyamide oder gar Polyaramide.

Weiter kann in einzelnen Anwendungsfällen auch an Polymere mit einem Molekulargewicht von mehr als 500.000 g/mol als Festkörperschmierstoff gedacht werden. Als mögliche Anwendungsbeispiele sei an hochmolekulares Polyethylen (HNPE) oder an ultrahochmolekulares Polyethylen (OHM-PE) gedacht. Andere Polyolefine mit entsprechend hohem Molekulargewicht kommen dabei ebenfalls in Frage.

Weitere mögliche polymere Festkörperschmierstoffe sind aliphatische Polyether, wie etwa Polyacetal, oder aromatische Polyether, wie etwa aromatische Polyeterketone (PEEK). Auch aromatische Polyester, wie etwa Polyethylenterephthalat, kommen als polymere Festkörperschmierstoffe in Frage, wenngleich alle diese in dem mechanisch besonders belastenden Betrieb einer Kugelkupplung, die besonders häufig in landwirtschaftlichen Fahrzeugen Verwendung findet, eine niedrigere Standzeit aufweisen werden, als die bevorzugten aromatischen Polyamide oder gar Polyaramide.

Alle genannten Polymere können Füllstoffe enthalten, welche ihre Schmierungsfähigkeit verstärken können. Mögliche geeignete Füllstoffe sind Öle, Molybdänsulfid, Graphit, Partikel oder/und Fasern aus Polytetrafluorethylen, oder auch festigkeitsverstärkende Füllstoffe, wie Glas.

Ein Vorteil von polymeren Festkörperschmierstoffbauteilen liegt in der Materialelastizität des Werkstoffs. Das Festkörperschmierstoffbauteil kann so in seiner endgültigen vorbestimmten Gestalt ausgebildet werden und auch ohne zerlegende Montage der es tragenden Kupplungspfanne durch Montageverformung an dieser angeordnet werden. Beispielsweise kann das Festkörperschmierstoffbauteil mit dem daran ausgebildeten Rastvorsprung über den oben beschriebenen Absatz hinweg durch Verformung in die Kupplungspfanne bis zum Erreichen einer endgültigen Montageposition bewegt werden. Dann, wenn der Rastvorsprung einer Nut am tragenden Kupplungsbauteil gegenübersteht, wird sich das Festkörperschmierstoffbauteil aufgrund seiner Materialelastizität mit seinem Rastvorsprung in die Nut hinein entspannen und somit den gewünschten formschlüssigen Rasteingriff herstellen. Entsprechendes gilt auch für den Fall, dass der Rastvorsprung an einem Kupplungsbauteil und die zugeordnete Nut am Festkörperschmierstoffbauteil ausgebildet ist, was jedoch aus den oben genannten Gründen, aber auch aus dem erhöhten Fertigungsaufwand eines in einem konkaven Kupplungsabschnitt vorzusehenden Rastvorsprung nicht bevorzugt ist.

Erfindungsgemäß ist die Kupplungspfanne einstückig ausgebildet, beispielsweise aus einem Stück geschmiedet und umfasst in diesem einstückigen Zustand wenigstens eine Kupplungsausbildung, an welchem der konkave Kupplungsabschnitt ausgebildet ist und einen von der Kupplungsausbildung abstehenden Deichselabschnitt. Diese einstückige Ausbildung soll nicht ausschließen, dass an die so gebildete einstückige Kupplungspfanne weitere Bauteile anmontiert sind, die den Funktionsumfang der Kupplungspfanne lediglich erweitern, aber nicht notwendig sind, um ihre grundlegende Kupplungsfunktion herzustellen.

Grundsätzlich kann die oben beschriebene Montage des Festkörperschmierstoffbauteils an der Kupplungspfanne bei einem massiven Festkörperschmierstoffbauteil allein aufgrund der geschilderten Verformung erfolgen. Die Verformung endet dann, wenn der beschriebene Rastvorsprung sich zum Hintergriff des Absatzes in der Kupplungspfanne entspannt.

Die Montage kann dadurch erleichtert werden, dass das Festkörperschmierstoffbauteil wenigstens eine Aussparung aufweist, welche sich ausgehend von einem Einführende, durch welches hindurch die Kupplungskugel zur Anlage an das Festkörperschmierstoffbauteil einführbar ist, in das Festkörperschmierstoffbauteil hinein erstreckt. Durch diese wenigstens eine Aussparung, welche bevorzugt eine nutförmige Aussparung ist, kann die zur Verformung des Festkörperschmierstoffbauteils bei dessen Anordnung an der Kupplungspfanne oder an der Kupplungskugel notwendige Kraft vermindert werden.

Wenngleich die vorzugsweise nutförmig ausgebildete Aussparung als Materialdünnstelle ausgebildet sein kann, so ist besonders bevorzugt die wenigstens eine nutförmige Aussparung als das Festkörperschmierstoffbauteil in Dickenrichtung durchsetzender Schlitz ausgebildet. Dadurch kann das Festkörperschmierstoffbauteil mit so geringer Kraft zur Montage ausreichend verformt werden, dass ein Werkzeugeinsatz zur Verformung nicht erforderlich ist.

Die zur Verformung bei der Montage des Festkörperschmierstoffbauteils an der Kupplungspfanne benötigte Kraft hängt dabei unter anderem von der Länge der Aussparung ab, welche diese ausgehend von dem Einführende in das Festkörperschmierstoffbauteil hinein hat.

Eine signifikante Herabsetzung der zur Verformung bei der Montage notwendigen Kraft kann dann erzielt werden, wenn die wenigstens eine Aussparung sich wenigstens über ein Fünftel der axialen Länge des Festkörperschmierstoffbauteils vom Einführende bis zu dem diesem entgegengesetzten Anlageende erstreckt. Die axiale Länge entspricht im Wesentlichen der Erstreckungslänge des Festkörperschmierstoffbauteils längs der Einführbahn, längs welcher eine Kupplungskugel in das Festkörperschmierstoffbauteil hinein eingeführt wird. Bei einem beispielsweise halbkugelförmigen Festkörperschmierstoffbauteil ist daher dessen axiale Erstreckung vom Einführende bis zum Anlagenende der Radius der halbkugelförmigen konkaven, die Kupplungskugel aufnehmenden Höhle des Festkörperschmierstoffbauteils.

Bei der oben bezeichneten Länge eines Fünftels der axialen Abmessung des Festkörperschmierstoffbauteils vom Einführende bis zum Anlagenende ist die Montage zwar erleichtert, jedoch können die zur Montage erforderliche Verformungskräfte immer noch den Einsatz von Werkzeug erfordern. Bevorzugt erstreckt sich daher die wenigstens eine Aussparung über wenigstens ein Drittel der axialen Länge des Festkörperschmierstoffbauteils vom Einführende bis zum Anlagenende.

Um sicherzustellen, dass auch weniger kräftige Monteure das Festkörperschmierstoffbauteil werkzeugfrei an der Kupplungspfanne anbringen können, ist besonders bevorzugt vorgesehen, dass sich die wenigstens eine Aussparung über wenigstens die Hälfte der axialen Länge des Festkörperschmierstoffbauteils erstreckt.

Da sich allerdings auch die Haltekraft des Festkörperschmierstoffbauteils an der Kupplungspfanne mit der axialen Länge der wenigstens einen Aussparung ändert, insbesondere mit zunehmender axialer Länge der Aussparung geringer wird, ist für einen sicheren Halt des Festkörperschmierstoffbauteils an der Kupplungspfanne vorteilhafterweise vorgesehen, dass sich die wenigstens eine Aussparung über nicht mehr als drei Viertel der axialen Länge des Festkörperschmierstoffbauteils vom Einführende bis zu dem diesem entgegengesetzten Anlagenende erstreckt.

Zur Vermeidung von unerwünschten Kerbwirkungen ist bevorzugt das im Festkörperschmierstoffbauteil gelegene, dem Einführende fern liegende Längsende der wenigstens einen Aussparung abgerundet ausgebildet.

Zwar soll nicht ausgeschlossen sein, dass sich die wenigstens eine Aussparung in einem Winkel von dem Einführende weg in das Festkörperschmierstoffbauteil hinein erstreckt. Jedoch ist dies nicht bevorzugt. Aus Gründen einer Reinhaltung des Kupplungsabschnitts ist es viel mehr bevorzugt, wenn sich die wenigstens eine Aussparung im Wesentlichen orthogonal von dem Einführende weg erstreckt. In diesem Falle besteht die Möglichkeit, dass in der wenigstens einen Aussparung sich unerwünschterweise angesammelter Schmutz löst und aus der Aussparung hinaus fällt. Aus demselben Grunde ist bevorzugt, dass die wenigstens eine Aussparung einen geradlinigen Verlauf in der Oberfläche des Festkörperschmierstoffbauteils aufweist. Eine Krümmung der die wenigstens eine Aussparung aufweisenden Oberfläche soll dabei für die Beurteilung der Geradlinigkeit der Aussparung keine Rolle spielen. Vorteilhafterweise liegen also eine Mittellinie einer Aussparung und die Einführbahn in einer gemeinsamen Ebene.

Zur weiteren Montageerleichterung kann das Festkörperschmierstoffbauteil eine Mehrzahl von Aussparungen aufweisen, wie sie zuvor beschrieben wurden. Vorzugsweise sind diese Aussparungen um die Einführbahn herum in Umfangsrichtung mit Abstand vorgesehen, besonders bevorzugt mit äquidistantem Abstand. Somit sind zwischen zwei in Umfangsrichtung benachbarten Aussparungen Lamellen aus dem Festkörperschmierstoffmaterial gebildet, welche in der Art einer Blattfeder an ihrem einen Längsende fest mit dem übrigen Festkörperschmierstoffbauteil verbunden sind und federnd von diesem zum Einführende hin auskragen. Durch den bevorzugten äquidistanten Abstand der Aussparungen in Umfangsrichtung kann gewährleistet werden, dass die Verformung jeder so gebildeten Lamelle bei gleichem Verformungsbetrag in etwa den gleichen Kraftbetrag erfordert.

Bevorzugt schneidet die wenigstens eine Aussparung bzw. die Mehrzahl von Aussparungen, den oben beschriebenen Rastvorsprung am Festkörperschmierstoffbauteil, da der Rastvorsprung als Materialverdickung dem Festkörperschmierstoffbauteil eine lokal erhöhte Steifigkeit verleiht, was den zur Montageverformung notwendigen Kraftaufwand zusätzlich erhöht. Aus den oben genannten Gründen schneidet die wenigstens eine Ausnehmung bzw. die Mehrzahl von Ausnehmungen, den Rastvorsprung bevorzugt in einem rechten Winkel.

Nicht nur kann daran gedacht sein, alleine die Kupplungspfanne mit einem Festkörperschmierstoffbauteil auszurüsten, sondern es kann auch erwogen werden, Kupplungspfanne und Kupplungskugel einer Kugelkupplung mit Festkörperschmierstoffbauteilen zu versehen, wengleich dies wegen des hierzu nötigen Aufwands im Verhältnis zu der dadurch erzielten Wirkung nicht bevorzugt ist.

Die vorliegende Erfindung wird nachfolgend anhand der beiliegenden Figuren beschrieben werden. Es stellt dar:
- Fig. 1: eine perspektivische Teilansicht einer erfindungsgemäßen Kupplungspfanne mit Blick in den konkaven Kupplungsabschnitt der Kupplungspfanne,
- Fig. 2a: eine Längsschnittansicht durch die Kupplungspfanne von Fig. 1,
- Fig. 2b: eine mit der Kupplungspfanne von Fig. 2a kuppelbare Kupplungskugel,
- Fig. 3: eine der Perspektive von Fig. 2a entsprechende Längsschnittansicht durch eine alternative Ausführungsform einer erfindungsgemäßen Kupplungspfanne,
- Fig. 4a: eine der Perspektive von Fig. 2a entsprechende Längsschnittansicht durch eine Kupplungspfanne von Fig. 2a mit einer zweiten Ausführungsform eines Festkörperschmierstoffbauteils und
- Fig. 4b: eine von der vorliegenden Erfindung nicht erfasste Kupplungskugel mit daran angeordnetem Festkörperschmierstoffbauteil in der Teilschnittansicht, wobei das Festkörperschmierstoffbauteil mutatis mutandis entsprechend jenem von Fig. 4a ausgestaltet ist.

In den dargestellten Ausführungsformen ist die vorliegende Erfindung am Beispiel einer Kupplungspfanne dargestellt. Die vorliegende Erfindung kann aber zusätzlich an einer Kupplungskugel einer Kugelkupplung ausgeführt sein.

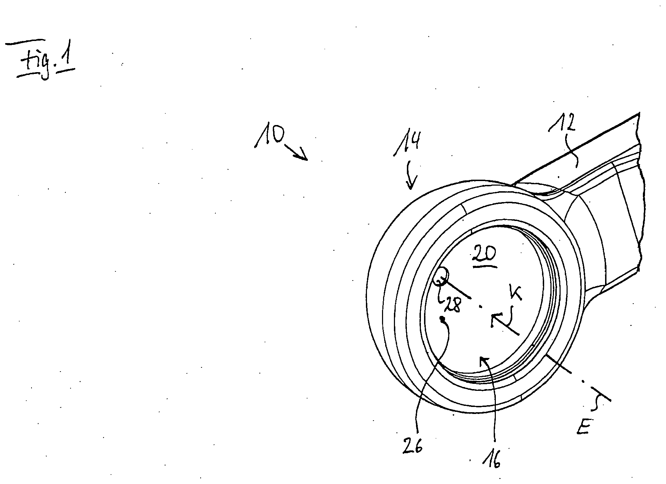

In Fig. 1 ist eine erste erfindungsgemäße Ausführungsform einer Kupplungspfanne allgemein mit 10 bezeichnet. Die Kupplungspfanne, welche in Fig. 1 perspektivisch von schräg unten in Teilansicht dargestellt ist, zeigt zunächst einen Abschnitt einer Deichsel 12 und einer mit der Deichsel 12 fest verbundene Kupplungsausbildung 14 der Kupplungspfanne 10. Erfindungsgemäß sind Deichsel 12 und Kupplungsausbildung 14 aus einem Rohling einstückig geschmiedet, um durch die dadurch erzielte Kaltverformung eine möglichst hohe Bauteilfestigkeit zu erzielen. Die Deichsel 12 kann in üblicher Weise mit einem Fahrzeug, in der Regel einem Nachlauffahrzeug, verbunden sein.

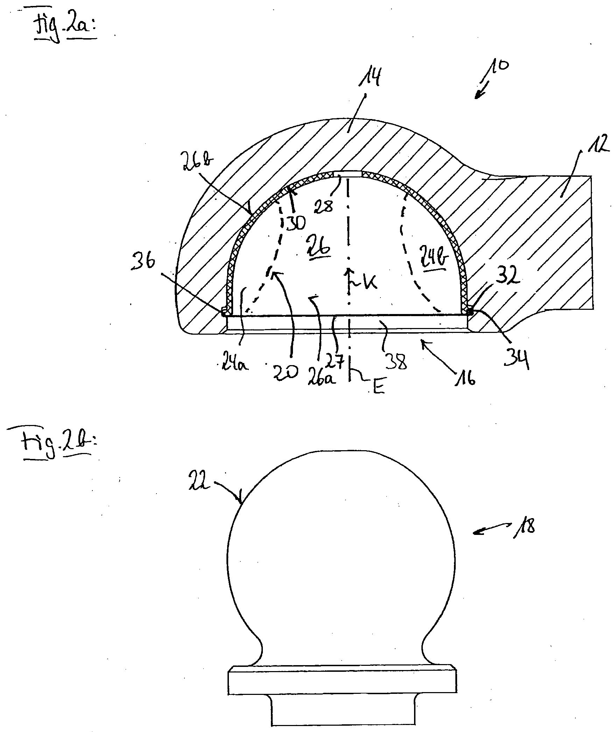

Die Kupplungsausbildung 14 weist eine Einführöffnung 16 auf, durch welche hindurch eine Kupplungskugel, wie etwa die in Fig. 2b dargestellte Kupplungskugel 18 längs einer Einführbahn E in Einführrichtung K einführbar ist. Die Einführbahn E, welche eine geradlinige oder/und eine krummlinige Bahn sein kann, sei im hier dargestellten Beispiel der Einfachheit halber als geradlinige Einführbahn E angenommen.

In Einführrichtung K hinter der Einführöffnung 16 ist ein konkaver Kupplungsabschnitt 20 gelegen, welcher im gekuppelten Zustand der Kupplungspfanne 10 mit einem konkaven Gegenkupplungsabschnitt 22 der Kupplungskugel 18 (siehe Fig. 2b) in Anlageeingriff stehen kann, und diesen in einem Berührbereich berührt. Der Berührbereich kann sich in seiner Lage oder/und Ausdehnung abhängig von dem an der gekuppelten Kugelkupplung auftretenden Lastfall ändern. Beispielsweise kann im beschleunigten Zugbetrieb der Berührbereich näher am deichselfernen Längsende des Kupplungsabschnitts 20 gelegen sein, wie in Fig. 2a durch den strichlinierten Berührbereich 24a angedeutet ist.

Bei Verzögerung des gekuppelten Zugs kann dagegen der Berührbereich näher am deichselnäheren Längsende des Kupplungsabschnitts gelegen sein, wie in Fig. 2a durch den strichlinierten Berührbereich 24b angedeutet ist. Beide Berührbereiche 24a und 24b liegen bei Geradeausfahrt des gekuppelten Zugs vorzugsweise spiegelsymmetrisch zur Schnittebene der Längsschnittdarstellung von Fig. 2a.

Zur Verminderung der zwischen der Kupplungskugel 18 und der Kupplungspfanne 10 im gekuppelten Zustand auftretenden Reibung ist in dem in den Fig. 1 bis 3 gezeigten Beispiel in der Kupplungspfanne 10 ein reibungsverminderndes Bauteil 26 vorgesehen, welches sich in den dargestellten Ausführungsbeispielen im Wesentlichen über den gesamten Kupplungsabschnitt 20 der Kupplungspfanne 10 erstreckt.

Das reibungsvermindernde Bauteil 26, welches wegen seiner reibungsvermindernden Wirkung als Schmierstoffbauteil bezeichnet wird, liegt in einem Bezugszustand mit einer Temperatur von 20°C, einem Luftdruck von einem bar und einer ausschließlichen mechanischen Belastung aufgrund seines Eigengewichtes als Festkörper mit vorgegebener Gestalt vor. Deshalb ist das reibungsvermindernde Bauteil 26 in der vorliegenden Anmeldung als Festkörperschmierstoffbauteil 26 bezeichnet.

Das Festkörperschmierstoffbauteil 26 ist vorteilhafterweise ein Polymerbauteil, welches werkstoffbedingt einfach in gewünschter Gestalt herzustellen ist.

Hinsichtlich der möglichen Werkstoffe zur Bildung des Festkörperschmierstoffbauteils 26 oder wenigstens seiner zur Kupplungskugel 18 hin weisenden Anlagefläche 26a wird auf die Ausführungen in der vorstehenden Beschreibungseinleitung verwiesen. Aus Gründen einer besonders vorteilhaften kombinierten Wirkung hoher Standfestigkeit und geringer Reibung ist ein Festkörperschmierstoffbauteil 26 aus aromatischem Polyamid oder noch stärker bevorzugt aus Polyaramid gebildet. Wenigstens die Anlagefläche 26a des Festkörperschmierstoffbauteils 26 kann aus den genannten Werkstoffen gebildet sein.

In den Fig. 1 und 2a ist das Festkörperschmierstoffbauteil 26 als einstückiges Bauteil gezeigt, welches vorteilhaft den gesamten konkaven Kupplungsabschnitt 20 bedeckt. Hierzu kann das Festkörperschmierstoffbauteil 26 als Montageerleichterung eine Öffnung 28 aufweisen, um der bei der Montage des Festkörperschmierstoffbauteils 26 an die Kupplungsausbildung 14 zwischen dem Festkörperschmierstoffbauteil 26 und der konkaven Oberfläche 30 der Kupplungsausbildung 14 vorhandenen Luft eine Entweichungsöffnung bereitzustellen, so dass das Festkörperschmierstoffbauteil 26 im Wesentlichen vollflächig an der konkaven Fläche 30 der Kupplungsausbildung 14 anliegend montiert werden kann. Vorzugsweise liegt also das Festkörperschmierstoffbauteil mit einem Großteil seiner zur Anlagefläche entgegengesetzten Außenfläche 26b an der konkaven Wand der Kupplungsausbildung 14 an. Besonders bevorzugt liegt die gesamte der Anlagefläche 26a entgegengesetze Außenfläche 26b an der konkaven Fläche 30 der Kupplungsausbildung 14 an. Die Öffnung 28 ist bevorzugt an dem Anlageende 29 des Festkörperschmierstoffbauteils 26 vorgesehen.

Grundsätzlich kann daran gedacht sein, die Flächen 26b und 30 des Festkörperschmierstoffbauteils 26 einerseits und der Kupplungsausbildung 14 andererseits miteinander zu verkleben.

Zur erleichterten Reparatur und Wartung des Festkörperschmierstoffbauteils 26, insbesondere zu seinem erleichterten Austausch im Falle einer Beschädigung ist es jedoch vorteilhaft, wenn das Festkörperschmierstoffbauteil 26 nur formschlüssig in der Kupplungsausbildung 14 gehalten ist.

Hierzu kann die Kupplungsausbildung 14 in Einführrichtung K hinter der Einführöffnung 16 einen Absatz 32 aufweisen, welcher vorzugsweise kontinuierlich um die Einführbahn E umläuft. Dieser Absatz 32 kann Teil einer Nut 34 sein, welche ebenfalls vorzugsweise vollständig um die Einführbahn E umläuft.

Vorzugsweise liegt der Absatz 32 oder/und die Nut 34 zur Erleichterung der Montage des Festkörperschmierstoffbauteils 26 in der Kupplungsausbildung 14 in einer Ebene, die besonders bevorzugt parallel zur Einführöffnung 16 oder orthogonal zur Einführbahn E orientiert ist.

Zum Rasteingriff in die Nut 34 kann radial außen am Festkörperschmierstoffbauteil 26 ein auskragender Rastvorsprung 36 ausgebildet sein, welcher besonders bevorzugt kontinuierlich um das Festkörperschmierstoffbauteil 26 umläuft.

Um unerwünschte vom Kupplungsabschnitt 20 weg weisende Spalte zwischen dem Festkörperschmierstoffbauteil 26 und dem Kupplungsabschnitt 14 zu vermeiden, in welchen sich im Betrieb der hier diskutierten Kupplung Schmutz ansammeln kann, ist bevorzugt der Rastvorsprung 26 an einem im montierten Zustand des Festkörperschmierstoffbauteils 26 der Einführöffnung 16 nächstgelegenen Ende 17 (Einführende) des Festkörperschmierstoffbauteils 26 vorgesehen. Das Einführende 17 liegt dem Anlageende 29 axial, also bezüglich der Einführbahn E, gegenüber.

Abhängig von der Gestaltung der Kupplungsausbildung 14 und der darin vorgesehenen konkaven Ausnehmung kann sich an den im montierten Zustand der Einführöffnung 16 nächstgelegenen Endabschnitt des Festkörperschmierstoffbauteils 26 ein zylindrischer oder allgemein nur um eine Krümmungsachse gekrümmter Bereich anschließen, an welchen sich in Einführrichtung K noch weiter innen gelegen ein domartiger Abschnitt, also ein um zwei zueinander orthogonale Krümmungsachsen gekrümmter Abschnitt, vorzugsweise ein kugelkalottenförmiger Abschnitt oder ein Abschnitt mit wenigstens einer kugelkalottenförmigen Anlagefläche 26a anschließt.

Entgegen der Einführrichtung K vor der Nut 34 kann ebenfalls ein Einführabschnitt 38 der Kupplungspfanne 10 bzw. der Kupplungsausbildung 14 vorgesehen sein, welcher vorzugsweise mit zylindrischer Fläche und der Einführbahn E als Zylinderachse ausgebildet sein kann, um das Einführen der Kupplungskugel 18 in den Kupplungsabschnitt 20 zu erleichtern.

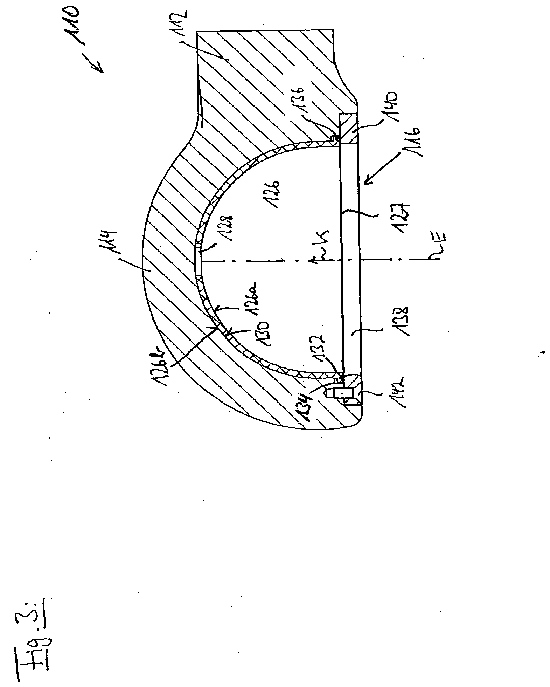

In Fig. 3 ist eine zweite erfindungsgemäße Ausführungsform einer Kupplungspfanne dargestellt.

Die zweite Ausführungsform, bei welcher gleiche und funktionsgleiche Bauteile bzw. Bauteilabschnitte wie in der ersten Ausführungsform der Fig. 1 und 2a gleiche Bezugszeichen aufweisen, jedoch erhöht um die Zahl 100, wird nachfolgend nur insofern beschrieben werden, als es sich von der ersten Ausführungsform unterscheidet, auf deren Beschreibung ansonsten ausdrücklich verwiesen sei. Im Gegensatz zur ersten Ausführungsform, bei welcher die Kupplungsausbildung 14 einstückig ausgebildet ist, ist bei der in Fig. 3 dargestellten zweiten Ausführungsform einer erfindungsgemäßen Kupplungspfanne die Einführöffnung 116 und vorzugsweise auch der Einführabschnitt 138 an einem gesondert von der Kupplungsausbildung 114 ausgebildeten Ringbauteil 140 vorgesehen.

Das Ringbauteil 114 kann, wie in Fig. 3 dargestellt ist, durch Befestigungsmittel, wie etwa Schrauben 142 an der Kupplungsausbildung 114 befestigt sein. In dem in Fig. 3 dargestellten Beispiel ist die einzig dargestellte Schraube 142 mit ihrer Schraubenachse parallel zur Einführbahn E das Ringbauteil 140 durchsetzend in die Kupplungsausbildung 114 eingedreht. Bei größerer axialer Länge bezogen auf die Einführbaren E des Ringbauteils 140 kann alternativ oder zusätzlich zu der in Fig. 3 dargestellten Lösung auch an ein radiales Eindrehen von Befestigungsschrauben bezüglich der Einführbahn E gedacht sein.

Zur möglichst gleichmäßigen Ausübung einer Befestigungskraft zur Befestigung des Ringbauteils 140 an der Kupplungsausbildung 114 ist vorteilhaft eine Mehrzahl von Schrauben 142 vorgesehen, von welchen lediglich eine in der Schnittebene von Fig. 3 gelegen ist. Besonders bevorzugt sind die Schrauben 142 in Umfangsrichtung um die Einführbahn E äquidistant voneinander vorgesehen.

Die in Fig. 3 dargestellte Ausführungsform mit lösbar an der Kupplungsausbildung 114 festgelegten Ringbauteil 140 erleichtert einen Austausch des Festkörperschmierstoffbauteils 126 im Falle seiner Beschädigung bzw. in Falle des Erreichens seiner Betriebslebensdauer.

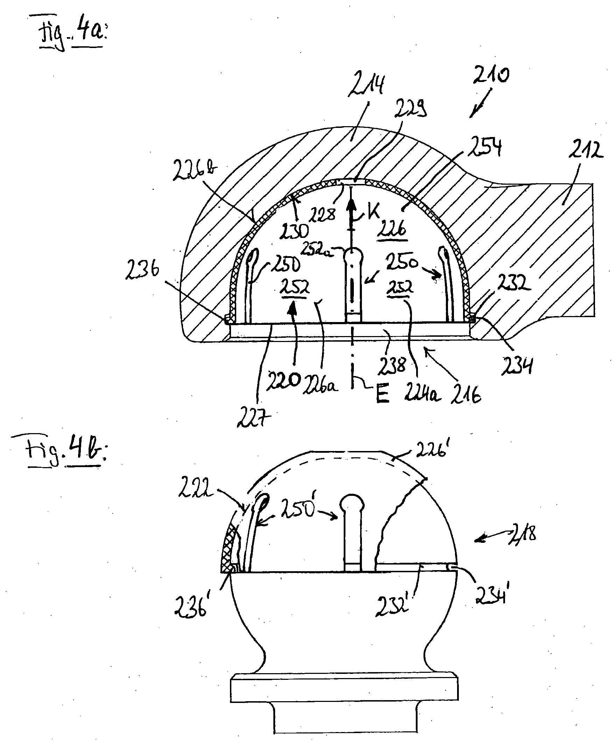

In Fig. 4a ist eine weitere erfindungsgemäße Ausführungsform einer Kupplungspfanne der vorliegenden Anmeldung gezeigt. Die Ansicht von Fig. 4a entspricht in der Perspektive jener von Fig. 2a. Gleiche bzw. funktionsgleiche Bauteile bzw. Bauteilabschnitte wie in Fig. 2a sind in Fig. 4a mit gleichen Bezugszeichen versehen, jedoch erhöht um die Zahl 200. Die Ausführungsform der Fig. 4a wird nur insofern beschrieben werden, als sie sich von jener der Fig. 2a unterscheidet, auf deren Beschreibung ansonsten ausdrücklich auch zur Erläuterung der Fig. 4a verwiesen wird.

Die Kupplungspfanne 210 entspricht hinsichtlich der Kupplungsausbildung 214 und der Deichsel 212 vollständig der Kupplungspfanne 10 von Fig. 2a. Die Ausführungsform der Fig. 4a unterscheidet sich von jener der Fig. 2a lediglich durch die Ausgestaltung des Festkörperschmierstoffbauteils 226. Dieses ist mit wenigstens einer Aussparung 250 versehen, welche nachfolgend näher erläutert werden wird.

Das Festkörperschmierstoffbauteil 226 weist in dem dargestellten Ausführungsbeispiel mehr als eine Aussparung 250 auf, wenngleich als Montageerleichterung bereits eine einzige Aussparung ausreichen kann.

Im vorliegenden Ausführungsbeispiel weist das Festkörperschmierstoffbauteil 226 sechs Aussparungen 250 auf, welche bevorzugt äquidistant in Umfangsrichtung um die Einführbahn E herum vorgesehen sind. Lediglich der Vollständigkeit halber wird darauf hingewiesen, dass statt der beispielhaft verwendeten Anzahl von sechs Aussparungen auch zwei, drei, vier, fünf oder mehr als sechs Aussparungen vorgesehen sein können.

Die Aussparungen 250 sind vorzugsweise hinsichtlich Gestalt, Erstreckungsrichtung und Erstreckungslänge identisch ausgebildet.

Durch die in Umfangsrichtung um die Einführbahn E umlaufende Anordnung der Aussparungen 250 bilden diese in Umfangsrichtung zwischen sich eine der Anzahl an Aussparungen entsprechende Anzahl an Lamellen 252, welche bezüglich der Einführbahn E radial federnd von einem gemeinsamen Festkörperschmierstoffbauteilabschnitt 254 auskragen.

Die radiale Verformung bzw. Verlagerung der Lamellen 252 erfordert bei gleichem radialen Verformungsbetrag weniger Kraft als die Verformung des aussparungsfreien Festkörperschmierstoffbauteils 26 der Ausführungsform von Fig. 2a.

Die Aussparungen 250 erstrecken sich vom Einführende 227 des Festkörperschmierstoffbauteils 226 vorzugsweise geradlinig in rechtem Winkel weg in das Festkörperschmierstoffbauteil 226 hinein in Richtung zu dem dem Einführende 227 bezüglich der Einführbahn E entgegengesetzten Anlageende 229. Der Umstand, dass das Festkörperschmierstoffbauteil 226 in dem Bereich, in dem die Aussparung 250 vorgesehen ist, wenigstens abschnittsweise gekrümmt ist, soll an der Geradlinigkeit der Aussparung 250 nichts ändern. Die Aussparung 250 ist vielmehr deshalb geradlinig, weil es am jeweiligen lokalen Anbringungsort der Aussparung 250 keine zu der die Aussparung 250 aufweisenden Oberfläche des Festkörperschmierstoffbauteils 226 orthogonale Krümmungsachse gibt, um welche die Aussparung 250 gekrümmt ist.

In dem in Fig. 4a dargestellten Beispiel erstrecken sich die Aussparungen 250 etwa über die halbe axiale Länge des Festkörperschmierstoffbauteils zwischen dem Einführende 217 und dem Anlageende 229. Mit einer derart gewählten Länge der Aussparung ist eine zur Montage des Festkörperschmierstoffbauteils 226 an der in Fig. 4a gezeigten einstückig ausgebildeten Kupplungspfanne 210 bzw. an deren einstückigen Kupplungsausbildung 214 erforderlichen Verformung benötigte Kraft so weit reduziert, dass diese ohne Werkzeug bewirkt werden kann.

Zur Montage des Festkörperschmierstoffbauteils 226 an der Kupplungspfanne 210 kann der Monteur also von Hand die Lamellen 252 so weit nach radial innen zur Einführbahn E hin elastisch auslenken, dass der Rastvorsprung 36 an dem Einführabschnitt 238 vorbei bewegt werden kann, bis sich der Rastvorsprung 236 in die Nut 234 hinein entspannen kann und dort den Absatz 236 verliersicher hintergreifen kann. Der Absatz 232 bildet in den hier gezeigten Beispielen eine Stirnfläche der Nut 234.

Zur Vermeidung unerwünschter Kerbwirkungen ist das vom Einführende 227 fern liegende Längsende 252a der Aussparung 250 abgerundet ausgebildet.

Vorzugsweise ist die wenigstens eine Aussparung 250 als das Festkörperschmierstoffbauteil 226 in Dickenrichtung durchsetzender Schlitz ausgebildet, um die für die Montageverformung benötigte Kraft so weit wie möglich herabzusetzen. Dabei sollte jedoch darauf geachtet werden, dass die Umfangserstreckungslänge einer zwischen zwei Aussparungen 250 gelegenen Lamelle 252 größer ist als das Dreifache der lichten Weite in Umfangsrichtung einer Aussparung 250.

Vorzugsweise weist das Einführende 227 eines Festkörperschmierstoffbauteils 226 einen im Wesentlichen ebenen Rand auf, der sich besonders bevorzugt orthogonal zur Einführbahn E erstreckt. Durch diese Ausbildung kann eine über den Umfang gleichmäßige Anlagebedingung einer Kupplungskugel an das Festkörperschmierstoffbauteil 226 erreicht werden.

Besonders bevorzugt ist der Rastvorsprung 236 unmittelbar am Einführende 217 angeordnet.

Zur Montageerleichterung durch Verringerung der für die Anbringung des Festkörperschmierstoffbauteils 226 an der Kupplungsausbildung 214 der Kupplungspfanne 210 notwendigen Kraft ist es besonders vorteilhaft, wenn die Aussparung 250 den Rastvorsprung 236 schneidet, da der Rastvorsprung 236 als Materialverdickung des Festkörperschmierstoffbauteils 226 dessen Steifigkeit gegen radiale Verformung lokal erhöht. Dieser Erhöhung kann durch eine den Rastvorsprung schneidende Anordnung der wenigstens einen Aussparung entgegengewirkt werden.

In Fig. 4b, welche keine erfindungsgemäße Ausführungsform zeigt, ist dargestellt, wie ein dem Festkörperschmierstoffbauteil 226 von Fig. 4a entsprechendes Festkörperschmierstoffbauteil 226' an einer Kupplungskugel 218 in analoger Weise anzubringen ist.

Die Kupplungskugel 218 weist in analoger Weise bezüglich der Kupplungspfanne 210 einen Absatz 232' auf, welcher Teil einer Nut 234' ist, die vorzugsweise vollständig umlaufend an der Kupplungskugel 218, bevorzugt an deren Äquator, ausgebildet ist. In diese Nut 234' greift wiederum ein Rastvorsprung 236' des Festkörperschmierstoffbauteils 226' ein, wobei dieser Rastvorsprung 236' den Absatz 232' formschlüssig hintergreift.

Wesentlicher Unterschied der Ausführungsform der Fig. 4b ist, dass an dem Festkörperschmierstoffbauteil 226' der Rastvorsprung 236' zur Einführbahn E hin auskragt, während er im Ausführungsbeispiel der Fig. 4a von dieser weg vom Festkörperschmierstoffbauteil 226 auskragt.

Ansonsten wird zur Beschreibung des Festkörperschmierstoffbauteils 226' von Fig. 4b auf die Beschreibung des Festkörperschmierstoffbauteils 226 von Fig. 4a verwiesen.

## Patentansprüche

1. Kupplungspfanne (10; 110; 210) einer Kugelkupplung für einen Zugbetrieb, wobei die Kupplungspfanne (10; 110) zur Herstellung eines gekuppelten Zugs zur Kupplung mit einer Kupplungskugel (18; 218) ausgebildet ist und hierzu einen konkaven Kupplungsabschnitt (20; 120; 220) aufweist, der im gekuppelten Zustand der Kupplungspfanne (10; 110; 210) einem konvexen Gegenkupplungsabschnitt (22; 222) der Kupplungskugel (18; 218) gegenüberliegt und diesen in einem Berührbereich (24a, 24b) berührt,
**dadurch gekennzeichnet, dass** die Kupplungspfanne (10; 110; 210) einstückig ausgebildet ist und eine Kupplungsausbildung (14; 114; 214) sowie einen einstückig mit der Kupplungsausbildung (14; 114; 214) geschmiedeten Deichselabschnitt (12; 112; 212) zur Verbindung mit einem Nachlauffahrzeug aufweist, wobei im Kupplungsabschnitt (20; 120; 220) der Kupplungspfanne (10; 110; 210) wenigstens ein Schmierungsbereich (30; 130; 230) vorgesehen ist, welcher zur Aufnahme von Schmiermittel (26; 126; 226) ausgebildet ist, wobei in dem wenigstens einen Schmierungsbereich (30; 130; 230) ein Festkörperschmierstoffbauteil (26; 126; 226) aufgenommen ist, welches zumindest in einem Bezugszustand mit einer Temperatur von 20°C, einem Luftdruck von 1 bar und mechanisch nur durch sein Eigengewicht belastet als Festkörper vorliegt,
wobei das Festkörperschmierstoffbauteil durch Formschluss an der Kupplungspfanne (10; 110; 210) gehalten ist, wobei die Kupplungspfanne (10; 110; 210) eine Einführöffnung (16; 116; 216) aufweist, in welche die Kupplungskugel (18; 218) beim Ankuppeln längs einer Einführbahn (E) eingeführt wird, wobei in Einführrichtung (K) hinter der Einführöffnung (16; 116; 216) ein Absatz (32; 132; 232), vorzugsweise ein um die Einführbahn (E) umlaufender Absatz (32; 132; 232), in der Kupplungspfanne (10; 110; 210) ausgebildet ist, welcher von dem Festkörperschmierstoffbauteil (26; 126; 226) hintergriffen ist.

2. Kupplungspfanne (10; 110; 210) nach Anspruch 1,
**dadurch gekennzeichnet, dass** der Absatz (32; 132; 232) in der Kupplungspfanne (10; 110; 210) Teil einer Nut (34; 134; 234) ist, welche vorzugsweise vollständig um die Einführbahn (E) kontinuierlich umläuft.

3. Kupplungspfanne nach einem der vorhergehenden Ansprüche,
**dadurch gekennzeichnet, dass** das Festkörperschmierstoffbauteil (226) wenigstens eine Aussparung (250) aufweist, welche sich ausgehend von einem Einführende (27; 127; 227), durch welches hindurch die Kupplungskugel (18; 218) zur Anlage an das Festkörperschmierstoffbauteil (26; 126; 226) einführbar ist, in das Festkörperschmierstoffbauteil (226) hinein erstreckt.

4. Kupplungspfanne nach Anspruch 3,
**dadurch gekennzeichnet, dass** sich die wenigstens eine Aussparung (250) vom Einführende (27; 127; 227) ausgehend über wenigstens ein Fünftel, bevorzugt, über wenigstens ein Drittel, besonders bevorzugt über wenigstens die Hälfte der axialen Länge des Festkörperschmierstoffbauteils (226) vom Einführende (27; 127; 227), jedoch über nicht mehr als drei Viertel der axialen Länge des Festkörperschmierstoffbauteils erstreckt bis zu dem diesem entgegengesetzten Anlageende (29; 129; 229) erstreckt.

5. Kupplungspfanne nach einem der Ansprüche 3 oder 4,
**dadurch gekennzeichnet, dass** sich die wenigstens eine Aussparung (250) im Wesentlichen orthogonal von dem Einführende (27; 127; 227) weg, besonders bevorzugt geradlinig weg, erstreckt.

6. Kupplungspfanne nach einem der Ansprüche 3 bis 5,
**dadurch gekennzeichnet, dass** das Festkörperschmierstoffbauteil (226) eine Mehrzahl von Aussparungen (250) aufweist, welche bevorzugt in Umfangsrichtung um die Einführbahn (E) äquidistant angeordnet sind.

7. Kupplungspfanne nach einem der vorhergehenden Ansprüche,
**dadurch gekennzeichnet, dass** das Festkörperschmierstoffbauteil (26; 126, 226) eine Anlagefläche (26a; 126a; 226a) zur Anlage an die Kupplungskugel (18; 218) im gekuppelten Zustand aufweist.

8. Kupplungspfanne nach Anspruch 7,
**dadurch gekennzeichnet, dass** die Anlagefläche (26a; 126a; 226a) des Festkörperschmierstoffbauteils (26a; 126a; 226a) gegenüber einer dem Festkörperschmierstoffbauteil (26; 126; 226a) benachbarten Oberfläche des Kupplungsabschnitts vorsteht.

9. Kupplungspfanne nach Anspruch 7 oder 8,
**dadurch gekennzeichnet, dass** die Anlagefläche (26a; 126a; 226a) die Gestalt einer Kugelkalotte aufweist.

10. Kupplungspfanne nach einem der vorhergehenden Ansprüche,
**dadurch gekennzeichnet, dass** der gesamte Kupplungsabschnitt (20; 120; 220) durch das Festkörperschmierstoffbauteil (26; 126; 226) gebildet ist.

11. Kupplungspfanne nach einem der vorhergehenden Ansprüche,
**dadurch gekennzeichnet, dass** der Festkörperschmierstoff (26; 126; 226) ein Polymer, vorzugsweise ein teil- oder hochkristallines Polymer, insbesondere Polyamid, stärker bevorzugt aromatisches Polyamid, noch stärker bevorzugt Polyaramid umfasst.

12. Kugelkupplung für einen Zugbetrieb, mit einer Kupplungskugel (18) und mit einer einstückigen Kupplungspfanne (10; 110), welche mit der Kupplungskugel (18) zur Herstellung eines gekuppelten Zugs kuppelbar ist, wobei die Kupplungspfanne (10; 110) eine Kupplungsausbildung (14; 114; 214) und einen einstückig mit der Kupplungsausbildung (14; 114; 214) geschmiedeten Deichselabschnitt (12; 112; 212) zur Verbindung mit einem Nachlauffahrzeug aufweist, wobei die Kupplungspfanne (10; 110) einen konkaven Kupplungsabschnitt (20; 120) aufweist, der im gekuppelten Zustand der Kugelkupplung einem konvexen Gegenkupplungsabschnitt (22) der Kupplungskugel (18) gegenüberliegt und diesen in einem Berührbereich (24a, 24b) berührt, wobei im Kupplungsabschnitt (20; 120) der Kupplungspfanne (10; 110) oder/und im Gegenkupplungsabschnitt (22) der Kupplungskugel (18) wenigstens ein Schmierungsbereich (30; 130) vorgesehen ist, welcher zur Aufnahme von Schmiermittel (26; 126) ausgebildet ist,
wobei in dem wenigstens einen Schmierungsbereich (30; 130) ein Festkörperschmierstoffbauteil (26; 126) aufgenommen ist, welches zumindest in einem Bezugszustand mit einer Temperatur von 20°C, einem Luftdruck von 1 bar und mechanisch nur durch sein Eigengewicht belastet als Festkörper vorliegt,
**dadurch gekennzeichnet, dass** das Festkörperschmierstoffbauteil durch Formschluss an der Kupplungspfanne (10; 110; 210) gehalten ist, wobei die Kupplungspfanne (10; 110; 210) eine Einführöffnung (16; 116; 216) aufweist, in welche die Kupplungskugel (18; 218) beim Ankuppeln längs einer Einführbahn (E) eingeführt wird, wobei in Einführrichtung (K) hinter der Einführöffnung (16; 116; 216) ein Absatz (32; 132; 232), vorzugsweise ein um die Einführbahn (E) umlaufender Absatz (32; 132; 232), in der Kupplungspfanne (10; 110; 210) ausgebildet ist, welcher von dem Festkörperschmierstoffbauteil (26; 126; 226) hintergriffen ist.

13. Kugelkupplung nach Anspruch 12,
**dadurch gekennzeichnet, dass** diese durch Merkmale wenigstens eines der Ansprüche 2 bis 12 weitergebildet ist.

## Claims

1. Coupling socket (10; 110; 210) of a ball coupling for a towing operation, wherein the coupling socket (10; 110) for establishing a coupled train is adapted for coupling with a coupling ball (18; 218) and thus having a concave coupling portion (20; 120; 220) which in the coupled state of the coupling socket (10; 110; 210) is located opposite a convex counter-coupling portion (22; 222) of the coupling ball (18; 218) and contacts the latter in a contact area (24a, 24b),
**characterized in that** the coupling socket (10; 110; 210) is formed in one piece and comprises a coupling formation (14; 114; 214) as well as a tow bar portion (12; 112; 212) forged in one piece with the coupling formation (14; 114; 214) for connection with a trailing vehicle, wherein at least one lubrication region (30; 130; 230) is provided in the coupling portion (20; 120; 220) of the coupling socket (10; 110; 210), adapted for receiving a lubricant (26; 126; 226), wherein
a solid body lubricant component (26; 126; 226) is received in the at least one lubrication region (30; 130; 230), which at least in one reference state with a temperature of 20 degrees Celsius, an air pressure of 1 bar and mechanically loaded by its own weight only, is present as a solid body,
wherein the solid body lubricant component is held at the coupling socket (10; 110; 210) by form closure, said coupling socket (10; 110; 210) comprising an insertion opening (16; 116; 216) into which the coupling ball (18; 218) is inserted along an insertion path (E) during coupling, a stepped portion (32; 132; 232), preferably a stepped portion (32; 132; 232) passing around the insertion path (E), being formed in the coupling socket (10; 110; 210) behind the insertion opening (16; 116; 216) in the insertion direction (K), engaged from behind by said solid body lubricant component (26; 126; 226).

2. Coupling socket (10; 110; 210) according to claim 1,
**characterized in that** the stepped portion (32; 132; 232) in the coupling socket (10; 110; 210) is part of a groove (34; 134; 234) which preferably completely continues around said insertion path (E).

3. Coupling socket according to one of the preceding claims,
**characterized in that** the solid body lubricant component (226) comprises at least one recess (250) extending from one insertion end (27; 127; 227) through which the coupling ball (18; 218) can be inserted for abutment against the solid body lubricant component (26; 126; 226), into said solid body lubricant component (226).

4. Coupling socket according to claim 3,
**characterized in that** the at least one recess (250) extends from said insertion end (27; 127; 227) across at least one fifth, preferably at least one third, with particular preference across at least half of the axial length of said solid body lubricant component (226) from said insertion end (27; 127; 227), but across not more than three quarters of the axial length of said solid body lubricant component, to the opposite abutment end (29; 129; 229).

5. Coupling socket according to one of claims 3 or 4,
**characterized in that** the at least one recess (250) extends substantially orthogonally away from said insertion end (27; 127; 227), particularly preferred in a straight way.

6. Coupling socket according to one of claims 3 to 5,
**characterized in that** the solid body lubricant component (226) comprises a plurality of recesses (250), preferably arranged equidistantly in the circumferential direction of said insertion path (E).

7. Coupling socket according to one of the preceding claims,
**characterized in that** the solid body lubricant component (26; 126; 226) comprises an abutment surface (26a; 126a; 226a) for abutment at the coupling ball (18; 218) in the coupled state.

8. Coupling socket according to claim 7,
**characterized in that** the abutment surface (26a; 126a; 226a) of said solid body lubricant component (26a; 126a; 226a) projects in relation to a surface of the coupling portion adjacent to the solid body lubricant component (26; 126; 226a).

9. Coupling socket according to claim 7 or 8,
**characterized in that** the abutment surface (26a; 126a; 226a) has the form of a spherical calotte.

10. Coupling socket according to one of the preceding claims,
**characterized in that** the complete coupling portion (20; 120; 220) is formed by said solid body lubricant component (26; 126; 226).

11. Coupling socket according to one of the preceding claims,
**characterized in that** the solid body lubricant component (26; 126; 226) is a polymer, preferably a partly crystalline or a highly crystalline polymer, in particular a polyamide, more preferably aromatic polyamide, even more preferably polyaramide.

12. Ball coupling for a towing operation, with a coupling ball (18) and a one-piece coupling socket (10; 110) which can be coupled to the coupling ball (18) to establish a coupled train, said coupling socket (10; 110) having a coupling formation (14; 114; 214) and a tow bar portion (12; 112; 212) forged in one piece with the coupling formation (14; 114; 214) for connection with a trailing vehicle, wherein said coupling socket (10; 110) has a concave coupling portion (20; 120) which in the coupled state of the coupling socket is located opposite a convex counter-coupling portion (22) of the coupling ball (18) and contacts the latter in a contact area (24a, 24b), wherein at least one lubrication region (30; 130) is provided in the coupling portion (20; 120) of the coupling socket (10; 110) or/and in the counter-coupling portion (22) of the coupling ball (18), adapted for receiving a lubricant (26; 126), wherein
a solid body lubricant component (26; 126) is received in the at least one lubrication region (30; 130), which is present as a solid body in at least one reference state with a temperature of 20 degrees Celsius, an air pressure of 1 bar and mechanically loaded by its own weight only,
**characterized in that** the solid body lubricant component is held at the coupling socket (10; 110; 210) by form closure, said coupling socket (10; 110; 210) comprising an insertion opening (16; 116; 216) into which the coupling ball (18; 218) is inserted along an insertion path (E) during coupling, a stepped portion (32; 132; 232), preferably a stepped portion (32; 132; 232) passing around the insertion path (E), being formed in the coupling socket (10; 110; 210) behind the insertion opening (16; 116; 216) in the insertion direction (K), engaged from behind by said solid body lubricant component (26; 126; 226).

13. Ball coupling according to claim 12,
**characterized by** the latter being further developed by aspects of at least one of claims 2 to 12.

## Revendications

1. Œillet d'accouplement (10; 110; 210) d'un accouplement à boule pour une opération de traction dans lequel l'œillet d'accouplement (10; 110) est adapté pour réaliser un train accouplé pour l'accouplement avec une boule d'accouplement (18; 218) et comprend à cette fin une portion d'accouplement concave (20; 120; 220), opposée, dans l'état accouplé de l'œillet d'accouplement (10; 110; 210), à une contre-portion d'accouplement convexe (22; 222) de la boule d'accouplement (18; 218) et contactant cette dernière dans une région de contact (24a, 24b),
**caractérisé en ce que** l'œillet d'accouplement (10; 110; 210) est formé en une pièce et comprend une formation d'accouplement (14 ; 114 ; 214) ainsi qu'une portion de barre de traction (12 ; 112 ; 212) forgé en une pièce avec la formation d'accouplement (14 ; 114 ; 214) pour l'attachement à un véhicule tractée,
dans lequel au moins une région de lubrification (30; 130; 230) est prévue dans la portion d'accouplement concave (20; 120; 220) de l'œillet d'accouplement (10; 110; 210) adaptée pour recevoir du lubrifiant (26; 126; 226), dans lequel
une composante de lubrifiant à corps solide (26; 126; 226) est reçue dans ladite au moins une région de lubrification (30; 130; 230) qui, au moins dans un état de référence avec une température de 20 degrés et une pression d'air de 1 bar et mécaniquement chargée seulement par son poids propre, est présente en tant que corps solide,
dans lequel la composante de lubrifiant à corps solide est tenue à l'œillet d'accouplement (10; 110; 210) par complémentarité de forme, dans lequel l'œillet d'accouplement (10; 110; 210) comprend une ouverture d'insertion (16; 116; 216) dans laquelle la boule d'accouplement (18; 218) est insérée selon une voie d'insertion (E) lors de l'accouplement, une portion en saillie (32; 132; 232), de préférence une portion en saillie (32; 132; 232) passant autour de la voie d'insertion (E), étant formée derrière l'ouverture d'insertion (16; 116; 216) dans la direction d'insertion (K) dans l'œillet d'accouplement (10; 110; 210), engagée par derrière par la composante de lubrifiant à corps solide (26; 126; 226).

2. Œillet d'accouplement (10; 110; 210) selon la revendication 1,
**caractérisé en ce que** la portion en saillie (32; 132; 232) dans l'œillet d'accouplement (10; 110; 210) fait partie d'une rainure (34; 134; 234) qui continue de préférence complètement autour de la voie d'insertion (E).

3. Œillet d'accouplement selon une des revendications précédentes,
**caractérisé en ce que** la composante de lubrifiant à corps solide (226) comprend au moins une encoche (250) s'étendant d'une extrémité d'insertion (27; 127; 227) à travers laquelle la boule d'accouplement (18; 218) peut être insérée pour un appui sur la composante de lubrifiant à corps solide (26; 126; 226) dans la composante de lubrifiant à corps solide (226).

4. Œillet d'accouplement selon la revendication 3,
**caractérisé en ce que** ladite au moins une encoche (250) s'étend de l'extrémité d'insertion (27; 127; 227) sur au moins un cinquième, de préférence sur au moins un tiers et particulièrement préféré sur au moins la moitié de la longueur axiale de la composante de lubrifiant à corps solide (226) partant de l'extrémité d'insertion (27; 127; 227), mais non pas sur plus des trois quarts de la longueur axiale de la composante de lubrifiant à corps solide à l'extrémité d'appui opposée (29; 129; 229).

5. Œillet d'accouplement selon une des revendications 3 ou 4,
**caractérisé en ce que** ladite au moins une encoche (250) s'étend essentiellement de manière orthogonale de l'extrémité d'insertion (27; 127; 227), de préférence particulière de manière étroite.

6. Œillet d'accouplement selon une des revendications 3 à 5,
**caractérisé en ce que** la composante de lubrifiant à corps solide (226) comprend une pluralité d'encoches (250) qui sont arrangées de préférence à équidistance autour de la voie d'insertion (E).

7. Œillet d'accouplement selon une des revendications précédentes,
**caractérisé en ce que** la composante de lubrifiant à corps solide (26; 126; 226) comprend une surface d'appui (26a; 126a; 226a) pour un appui contre la boule d'accouplement (18; 218) dans l'état accouplé.

8. Œillet d'accouplement selon la revendication 7,
**caractérisé en ce que** la surface d'appui (26a; 126a; 226a) de la composante de lubrifiant à corps solide (26a; 126a; 226a) est en saillie par rapport à une surface de la portion d'accouplement adjacente à la composante de lubrifiant à corps solide (26; 126; 226a).

9. Œillet d'accouplement selon la revendication 7 ou 8,
**caractérisé en ce que** la surface d'appui (26a; 126a; 226a) possède la forme d'une calotte sphérique.

10. Œillet d'accouplement selon une des revendications précédentes,
**caractérisé en ce que** l'entière portion d'accouplement (20; 120; 220) est formée par la composante de lubrifiant à corps solide (26; 126; 226).

11. Œillet d'accouplement selon une des revendications précédentes,
**caractérisé en ce que** la composante de lubrifiant à corps solide (26; 126; 226) est un polymère, de préférence un polymère à cristallinité partielle ou élevée, en particulier un polyamide, de préférence particulière un polyamide aromatique, de préférence encore plus particulière un polyaramide.

12. Accouplement à boule pour une opération de traction avec une boule d'accouplement (18) et avec un œillet d'accouplement (10; 110) en une pièce qui peut être accouplé à la boule d'accouplement (18) pour former un train accouplé, dans lequel l'œillet d'accouplement (10; 110) comprend une formation d'accouplement (14 ; 114 ; 214) et une portion de barre de traction (12 ; 112 ; 212) forgé en une pièce avec la formation d'accouplement (14 ; 114 ; 214) pour l'attachement à un véhicule tracté dans lequel l'œillet d'accouplement (10; 110) comprend une portion d'accouplement concave (20; 120), opposée, dans l'état accouplé de l'accouplement à boule, à une contre-portion d'accouplement convexe (22) de la boule d'accouplement (18) et contactant cette dernière dans une région de contact (24a, 24b), dans lequel au moins une région de lubrification (30; 130) est prévue dans la portion d'accouplement (20; 120) de l'œillet d'accouplement (10; 110) ou/et dans la contre-portion d'accouplement (22) de la boule d'accouplement (18), adaptée pour recevoir du lubrifiant (26; 126),
dans lequel une composante de lubrifiant à corps solide (26; 126) est reçue dans ladite au moins une région de lubrification (30; 130) qui, au moins dans un état de référence avec une température de 20 degrés et une pression d'air de 1 bar et mécaniquement chargée seulement par son poids propre, est présente en tant que corps solide,
**caractérisé en ce que** la composante de lubrifiant à corps solide est tenue à l'œillet d'accouplement (10; 110; 210) par complémentarité de forme, dans lequel l'œillet d'accouplement (10; 110; 210) comprend une ouverture d'insertion (16; 116; 216) dans laquelle la boule d'accouplement (18; 218) est insérée selon une voie d'insertion (E) lors de l'accouplement, dans lequel une portion en saillie (32; 132; 232), de préférence une portion en saillie (32; 132; 232) passant autour de la voie d'insertion (E), est formée derrière l'ouverture d'insertion (16; 116; 216) dans la direction d'insertion (K) dans l'œillet d'accouplement (10; 110; 210), engagée par derrière par la composante de lubrifiant à corps solide (26; 126; 226).

13. Accouplement à boule selon la revendication 12,
**caractérisé en ce que** ce dernier est développé par des aspects d'au moins une des revendications 2 à 12.
